# EUROPÄISCHE PATENTSCHRIFT

(11) **EP 0 696 886 B1**
(45) Veröffentlichungstag und Bekanntmachung des Hinweises auf die Patenterteilung: **16.09.1998**
(21) Anmeldenummer: 94916210.1
(22) Anmeldetag: 06.05.1994
(51) Int. Cl.: A01K 63/04

(54) **VORRICHTUNG ZUM LÖSEN VON GASEN IN FLÜSSIGKEITEN**
DEVICE FOR DISSOLVING GASES IN LIQUIDS
DISPOSITIF POUR LA DISSOLUTION DE GAZ DANS DES LIQUIDES

(30) Priorität: 07.05.1993 DE 4315150
(43) Veröffentlichungstag der Anmeldung: 21.02.1996
(73) Patentinhaber: Tetra Werke Dr.rer.nat. Ulrich Baensch GmbH, 49324 Melle (DE)
(72) Erfinder: GRIESINGER, Ralph-Edgar, D-49143 Bissendorf (DE); RICHTER, Arno, D-49074 Osnabrück (DE)
(74) Vertreter: Tesch, Rudolf, Dr.
(86) Internationale Anmeldenummer: EP9401460
(87) Internationale Veröffentlichungsnummer: WO9426099

(56) Entgegenhaltungen:
- EP-A- 0 103 685
- WO-A-89/02218
- DE-A- 2 830 260
- DE-C- 186 865
- US-A- 2 824 728

## Beschreibung

Die Erfindung betrifft eine Vorrichtung zum Lösen von Gasen in Flüssigkeiten, insbesondere zur kontinuierlichen Anreicherung von Aquarienwasser mit CO₂-Gas, mit einer unten offenen Gaseinleitungskammer und zumindest einer weiteren, ebenfalls nach Einnahme der Betriebslage unten offenen Kammer, die durch Durchbrüche bzw. Öffnungen im unteren Teil ihrer seitlichen Wandung zur umgebenden Flüssigkeit hin offen ist, wobei benachbarte Kammern derart übereinander liegen, daß beim Einleiten von Gas in eine untere Kammer das nach Füllen dieser Kammer überlaufende Gas von einer darüberliegenden Kammer nach Art einer pneumatischen Wanne auffangbar ist und besagtes Gasvolumen auf seiner Unterseite eine Gasaustauschfläche zur angrenzenden Flüssigkeit bildet, und daß zumindest zwei aufeinanderfolgende Kammern in ein Gehäuse integriert sind, das aus zwei vertikal orientierten Längsteilen zusammengesetzt ist, die zusammen die seitlichen Wandungen jeder in dem Gehäuse integrierten Kammer bilden.

Aus der EP-A-103 685 ist bereits ein Versorgungsgerät für die Anreicherung von Aquarienwasser mit CO₂ bekannt. Dieses Gerät besteht aus einer Vielzahl verschiedener Teilstücke wie Behältnisse, Dichtungen und Rohren. Die dabei verwendeten, nach unten offenen Behältnisse müssen über eine Mindestgröße verfügen, die es erlaubt, die jeweils dazugehörigen Rohre (Überlauf- und Gaseinleitungsrohr) und Dichtungen darin aufzunehmen. Die Nachteile des bekannten Geräts sind darin zu sehen, daß es voluminös in den Ausmaßen und aufwendig herzustellen bzw. zu reinigen und für kontinuierlichen Betrieb nicht brauchbar ist.

Aufgabe der vorliegenden Erfindung ist es daher, eine Vorrichtung der eingangs genannten Art zur Verfügung zu stellen, die möglichst kompakt und einfach aufgebaut ist.

Diese Aufgabe löst die Erfindung durch die im unabhängigen Patentanspruch 1 angegebene Vorrichtung. Weitere vorteilhafte Ausgestaltungen der erfindungsgemäßen Vorrichtung sind in den abhängigen Patentansprüchen, der Beschreibung und der Zeichnung beschrieben.

Die erfindungsgemäße Vorrichtung zeichnet sich dadurch aus, daß sie eine beliebige Anzahl von übereinander angeordneten Auffangkammern umfaßt, wobei die Vorrichtung aus lediglich zwei Längsteilen zusammengesetzt ist und daher sowohl kostengünstig herzustellen als auch bequem zu reinigen ist.

Der Erfindung liegt die Erkenntnis zugrunde, daß die dicht geführten Überlaufrohre der Vorrichtung des Standes der Technik unnötig sind und weiterhin, daß deren Ersatz durch einfache Überlauföffnungen mit davor angebrachten Stegen den Aufbau der Vorrichtung derart vereinfacht, daß diese zweistückig aus zwei Längsteilen unter Ausbildung beliebig vieler, nahezu beliebig kleiner Auffangkammern zusammengesetzt werden kann.

Gegenstand der Erfindung ist daher eine Vorrichtung zum Lösen von Gasen in Flüssigkeiten, insbesondere zur kontinuierlichen Anreicherung von Aquarienwasser mit CO₂-Gas, die zumindest zwei, einseitig offene Kammern, deren Kammeröffnungen bei Einnahme der Betriebslage nach unten weisen, um Gasaustauschflächen mit der angrenzenden Flüssigkeit herzustellen, umfaßt, wobei benachbarte Kammern derart übereinanderliegen, daß beim Einleiten von Gas in eine untere Gaseinleitungskammer das nach Füllen dieser Kammer überlaufende Gas von einer darüber liegenden Kammer nach Art einer pneumatischen Wanne auffangbar ist, dadurch gekennzeichnet, daß zumindest zwei aufeinanderfolgende Kammern in ein Gehäuse integriert sind, das aus zwei Längsteilen zusammengesetzt ist, von denen jedes einen Wandungsbereich von jeder in dem Gehäuse integrierten Kammer bildet.

Von Vorteil ist bei der Vorrichtung gemäß der Erfindung gegenüber dem beschriebenen Stand der Technik der Aufbau der Vorrichtung aus nur zwei Längsteilen, der durch nur einen Montageschritt bewerkstelligt werden kann. Des weiteren ermöglicht die Einfachheit der erfindungsgemäßen Konstruktion die Herstellung der beiden Längsteile im Spritzgußverfahren, wodurch die Herstellungskosten erheblich gesenkt werden können. In ihrer Gesamtheit kann die erfindungsgemäße Vorrichtung deshalb kostengünstig und mit gegenüber dem Stand der Technik wesentlich verkleinertem Volumen hergestellt werden. Weiterhin verfügt sie über eine größere Anzahl an einzelnen Kammern, die trotz ihrer größeren Anzahl einfacher zusammenzubauen und zu reinigen sind als die Behältnisse und Rohre der bekannten Vorrichtung. Dies ist insbesondere deshalb vorteilhaft, da die erfindungsgemäß eingesetzte, kontinuierliche Diffusionstechnik durch Erhöhung der Anzahl an Kammern, die das Gas durchlaufen muß, optimiert wird.

Eine bevorzugte Ausführungsform der erfindungsgemäßen Vorrichtung besteht aus zwei spritzgegossenen Längsteilen, wobei im wesentlichen horizontal verlaufende Querwände zwischen den Kammern in das vordere Längsteil der Vorrichtung integriert sind. Bei dieser Ausführungsform ist die Montage besonders einfach, da nur die Rückwand aufgesetzt werden muß.

Vorteilhafterweise bestehen die beiden Längsteile aus dem gleichen Material, beispielsweise aus transparentem Kunststoff.

Es ist von besonderem Vorteil, wenn die unterste Kammer, in die das Gas eingeleitet wird, zur Bestimmung der Gasflußgeschwindigkeit als Blasenzähler eingesetzt wird.

Weiterhin hat es sich als günstig erwiesen, wenn die Stege auf der Unterseite der Querwände vertikal und asymmetrisch unterhalb der darüberliegenden Auffangkammer angeordnet sind. Bei dieser Ausführungsform wird der zur Verfügung stehende Raum der Auffangkammer möglichst vollständig zur Ausbildung von Gasaustauschflächen genutzt.

Darüberhinaus ist es bevorzugt, daß sich auf der Außenseite eines Längsteils der Apparatur eine integrierte Halterung für die Gasleitung befindet, vorzugsweise als Nut in der Außenwandung ausgebildet, in die ein Gaseinleitungsschlauch eingelassen werden kann. Der eingelassene Gasschlauch endet offen in der Gaseinleitungskammer.

Weitere bevorzugte Ausgestaltungen der erfindungsgemäßen Vorrichtung ergeben sich aus den Unteransprüchen.

Im nachfolgenden wird die Erfindung anhand der Zeichnung, die sich auf eine bevorzugte Ausführungsform bezieht, näher erläutert.

In der Zeichnung zeigen
- Fig. 1: die Vorderansicht der Vorrichtung;
- Fig. 2: die Seitenansicht der Vorrichtung;
- Fig. 3: die Draufsicht von oben auf die Vorrichtung;
- Fig. 4: einen Schnitt durch die mit "A" markierte Ebene der Fig. 1;
- Fig. 5: die Ansicht der Vorrichtung von unten; und
- Fig. 6: die komplette Apparatur in Betriebslage (eingebaut in einen Flüssigkeitsbehälter).

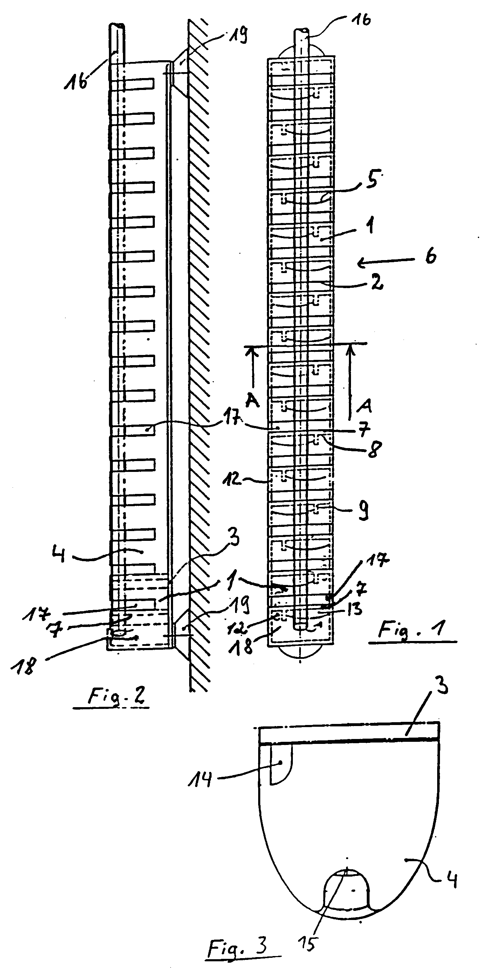

Fig. 1 zeigt das Gehäuse 6 der Vorrichtung mit dem Gaseinleitungsschlauch 16. Das Gas wird von oben durch den Gaseinleitungsschlauch 16 in die unterste Kammer der Vorrichtung, die Gaseinleitungskammer 18, geführt. Die Gaseinleitungskammer 18 dient auch als Blasenzähler zur Bestimmung der Gasflußgeschwindigkeit.

Die Gaseinleitungskammer 18 wird nach oben von einer ersten Querwand 7 abgegrenzt. Auf der Unterseite 8 dieser Querwand 7 befindet sich ein erster Steg 9, der eine Auffangkammer 13 und eine Überlaufkammer 12 festlegt. Das eingeleitete Gas sammelt sich in der Gaseinleitungskammer 18 in der Auffangkammer 13, bis es über den Steg 9 überläuft und in die Überlaufkammer 12 gelangt, in der sich eine Überlauföffnung 14, die die Querwand 7 durchsetzt, befindet. Durch die Überlauföffnung 14 gelangt das Gas in der nächsthöheren Kammer 1 in die Auffangkammer 13, die nach unten hin offen ist und durch einen ersten Durchbruch 17 im Flüssigkeitsaustausch mit der Umgebung steht. In dieser Auffangkammer 13, die das nach oben entweichende Gas nach Art einer pneumatischen Wanne auffängt, bildet das eingeleitete Gas eine erste Gasaustauschfläche 5 aus, an der Diffusions- bzw. Lösungsvorgänge stattfinden können. Wenn die Auffangkammer 13 mit Gas gefüllt ist, übersteigt die Gasaustauschfläche 5 den Steg 9 und das Gas läuft in die Überlaufkammer 12 über. Dort befindet sich wieder eine Überlauföffnung 14, welche die Querwand 7 durchsetzt und durch die das Gas in die nächsthöhere Auffangkammer 13 gelangt. Dort bildet sich wieder eine Gasaustauschfläche 5 aus und der oben beschriebene Vorgang wiederholt sich entsprechend der Anzahl an vorhandenen Kammern 1 der Vorrichtung. Durch die Überlauföffnung 14, welche die oberste Querwand 7 der Vorrichtung durchsetzt, tritt das Restgas aus der Vorrichtung aus.

Fig. 2 zeigt in der Seitenansicht der Vorrichtung das Gehäuse 6, bestehend aus zwei Längsteilen 3,4 mit den Querwänden 7 und den Durchbrüchen 17. Das Gehäuse 6 ist mit Halterungen 19 an der Innenwand eines Flüssigkeitsbehälters befestigt und enthält einen Gasschlauch 16, eingesetzt in eine Nut 15 (Fig. 3) an der Front des vorderen Längsteils 4. Durch die an zwei Seiten offenen Durchbrüche 17 steht die Vorrichtung im konstanten Flüssigkeitsaustausch mit der Umgebung, so daß die stattfindenden Diffusionsvorgänge an sich ständig erneuernden Flüssigkeitsgrenzflächen stattfinden können.

Fig. 3 zeigt die Draufsicht auf die Vorrichtung mit der Überlauföffnung 14, welche die Querwand 7 der obersten Kammer durchsetzt. Erkennbar sind die beiden Längsteile 3,4, von denen das eine Teil 4 U-förmig ausgebildet ist und eine Nut 15 zur Führung eines Gaseinleitungsschlauches 16 an seiner Front aufweist. Das sich auf der gegenüberliegenden Seite befindende Längsteil 3 ist eine im wesentlichen ebene Platte, die mit einer Aussparung in der Querwand 7 die Überlauföffnung 14 festlegt.

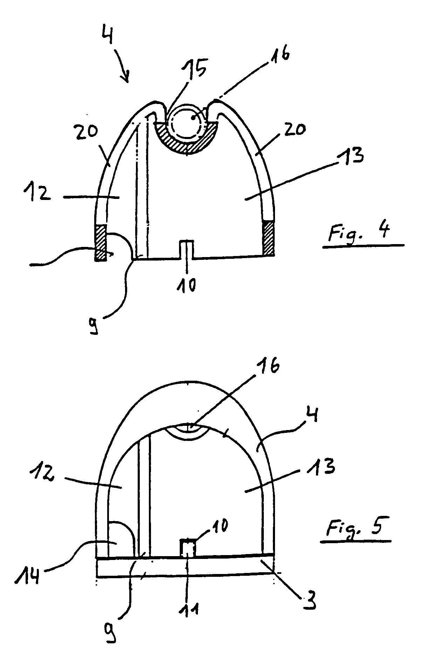

Fig. 4 zeigt einen Schnitt entlang der Linie "A" in Fig. 1, die eine Kammer 1 etwa hälftig durchteilt, wobei lediglich das U-förmige Längsteil 4 abgebildet wurde und auf die Darstellung des im wesentlichen aus einer ebenen Platte bestehenden Längsteils 3 verzichtet wurde. Die nicht schraffierten Außenwandbereiche 20 des Längsteils 4 stellen die beiden offenen Seiten eines Durchbruchs, der in Fig. 1 und 2 mit den Bezugszeichen 17 gekennzeichnet ist, dar. Der Steg 9, der sich bis zur Außenwandung 20 des Gehäuses 6 erstreckt, legt im Zusammenwirken mit dieser die Auffangkammer 13 und die Überlaufkammer 12 fest. Die Überlaufkammer 12 weist die Überlauföffnung 14 auf, welche die Querwand durchsetzt. Die Nut 15 dient zur Halterung des Gasschlauches 16 und befindet sich an der äußeren Front des Längsteils 4.

Die Nut 10 dient zur Aufnahme eines Klemmteils des weiteren Längsteils 3 und damit zu dessen abdichtender Befestigung am Längsteil 4. Die schraffierten Flächen der Außenwandung 20 sind die vertikal nicht unterbrochenen Außenwandabschnitte des Längsteils 4, die für diese Schnittansicht angeschnitten sind.

Fig. 5 zeigt eine Ansicht von unten auf die erfindungsgemäße Vorrichtung. Das U-förmig ausgebildete Längsteil 4 ist mit dem im wesentlichen planaren Längsteil 3 über ein in die Nut 10 des Längsteils 4 eingedrücktes Klemmteil 11 des Längsteils 3 verbunden. Die Oberflächenspannung der Flüssigkeit bewirkt dabei, daß die beiden Teile dichtend aneinandergefügt sind, so daß das durch die Vorrichtung nach oben steigende Gas innerhalb der Überlauföffnungen 14, deren eine Ecke durch beide Längsteile 3,4 gebildet wird, fließt. Beispielsweise ist in Wasser eine Abdichtung der Stoßstellen nicht notwendig, da durch die Oberflächenspannung des Wassers Spalten bis ca. 0,2 mm von den Gasblasen nicht durchtreten werden können. Der Steg 9 unterteilt die unterste Kammer, d.h. die Gaseinleitungskammer 18, in eine Auffangkammer 13 und eine Überlaufkammer 12. Das unten offene Ende des Gaseinleitungsschlauches 16 ist ebenfalls im Anschnitt sichtbar.

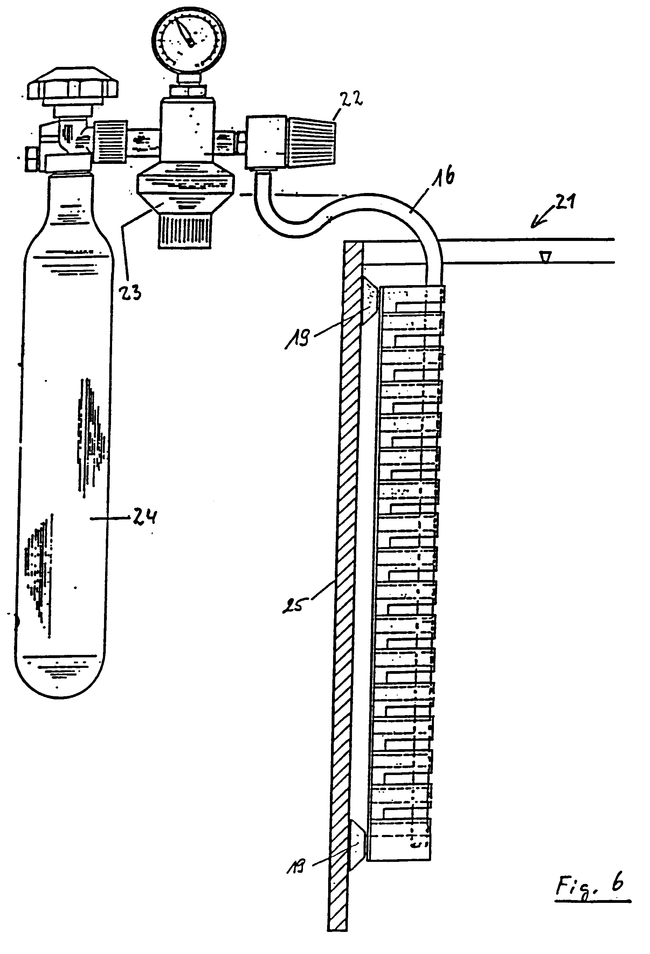

Fig. 6 zeigt die komplette Apparatur in Betriebslage. Die erfindungsgemäße Vorrichtung wird dabei in der Seitenansicht entsprechend der Figur 2 gezeigt. Aus einer Gasflasche 24 wird über ein Reduzierventil 23 und ein Regulierventil 22 Gas mittels des Gaseinleitungsschlauches 16 in die unterste Kammer der Vorrichtung eingeführt. Die Vorrichtung ist mit Saugnäpfen 19 an der Seitenwand 25 des Flüssigkeitsbehälters befestigt.

Die beiden Längsteile 3,4 der Vorrichtung können sowohl aus gleichen sowie auch aus unterschiedlichen Materialien bestehen. Für die Herstellung im Spritzgußverfahren und auch wegen seiner Korrosionsbeständigkeit in Wasser wird bevorzugt Kunststoff verwendet, zur Beobachtung des Gasflußes vorzugsweise durchsichtiger Kunststoff.

In der Auffangkammer 13 sammelt sich das Gas zunächst in Form einer einzigen Gasblase, die eine Gasaustauschfläche in Form eines Meniskus ausbildet. Bevor das Gas in die Überlaufkammer 12 überläuft, hat der tiefste Punkt des Meniskus die Höhe des Steges 9 weit überschritten. Dabei kann es vorkommen, daß das in der Auffangkammer 13 angesammelte Gas in einer einzigen Gasblase durch einen der Durchbrüche 17 entweicht, anstatt langsam durch die Überlauföffnung 14 nach oben zu perlen. Deshalb sollte die Überlauföffnung 14 und die Höhe des Steges 9 so auf die Fläche der Auffangkammer 13 abgestimmt sein, daß nach Füllung der Auffangkammer 13 und dem Übertreten der Gasblase über den Steg 9 das Gas langsam in kleinen Blasen in die nächsthöhere Auffangkammer 13 aufsteigt, ohne durch die seitlichen Durchbrüche 17 zu entweichen. Vorzugsweise beträgt das Verhältnis von Fläche der Auffangkammer 13 zur Fläche des Steges 9 mindestens 3:1 sowie das Verhältnis von Fläche der Auffangkammer zur Fläche der Überlauföffnung 30:1.

Die erfindungsgemäße Vorrichtung ist insbesondere geeignet, um Aquarienwasser mit CO₂ anzureichern, das von den im Aquarium befindlichen Wasserpflanzen zur Photosynthese benötigt wird. Ein CO₂-Versorgungsgerät für Aquarien bis ca. 400 l Inhalt hat dabei beispielsweise die folgenden Abmessungen:
- Fläche der Auffangkammer: : Ca. 300 mm²
- Fläche der Überlauföffnung: : Ca. 10 mm²
- Höhe der Stege: : Ca. 4 mm
- Anzahl der Querwände: : Ca. 16

Die Vorrichtung wird vorzugsweise innerhalb eines Flüssigkeitsbehälters unterhalb des Flüssigkeitsspiegels mit Halterungen an der Flüssigkeitsbehälterinnenwand befestigt. Die Halterungen können u.a. Saugnäpfe oder Schraubklemmen sein.

Die erfindungsgemäße Vorrichtung verzögert die Verweilzeit des Gases im Wasser, da das Gas vor seinem Austritt aus der Flüssigkeit durch eine Kaskade von vielen Auffangkammern geleitet wird. Die an der definierten Grenzfläche Gas/Wasser stattfindenden Diffusionsvorgänge betreffen einerseits das Lösen des eingeleiteten Gases, z.B. CO₂, in der Flüssigkeit sowie andererseits das Herauslösen ungelöster Fremdgase aus der Flüssigkeit, die sich in dem nach oben fließenden Gas anreichern. Das aus der obersten Überlauföffnung austretende Gas enthält somit einen hohen Anteil an Fremdgas.

Die Erfindung dient daher nicht nur der optimalen Ausnutzung des eingeleiteten Gases, sondern auch der Reinigung der Flüssigkeit von Fremdgasen. Die Vorrichtung ist bei kontinuierlicher Gaseinleitung ebenso gut verwendbar wie für den punktuellen Gebrauch.

## Patentansprüche

1. Vorrichtung zum Lösen von Gasen in Flüssigkeiten, insbesondere zur kontinuierlichen Anreicherung von Aquarienwasser mit CO₂-Gas, mit einer unten offenen Gaseinleitungskammer (18) und zumindest einer weiteren, ebenfalls nach Einnahme der Betriebslage unten offenen Kammer (1), die durch Durchbrüche bzw. Öffnungen (17) im unteren Teil ihrer seitlichen Wandung zur umgebenden Flüssigkeit hin offen ist, wobei benachbarte Kammern (1,18) derart übereinander liegen, daß beim Einleiten von Gas in eine untere Kammer das nach Füllen dieser Kammer überlaufende Gas von einer darüberliegenden Kammer nach Art einer pneumatischen Wanne auffangbar ist und besagtes Gasvolumen auf seiner Unterseite eine Gasaustauschfläche (5) zur angrenzenden Flüssigkeit bildet, dadurch gekennzeichnet, daß zumindest zwei aufeinanderfolgende Kammern (1, 18) in ein Gehäuse (6) integriert sind, das aus zwei vertikal orientierten Längsteilen (3,4) zusammengesetzt ist, die zusammen die seitlichen Wandungen jeder in dem Gehäuse (6) integrierten Kammer (1,18) bilden.

2. Vorrichtung nach Anspruch 1, dadurch gekennzeichnet, daß die Längsteile (3,4) lösbar miteinander verbunden sind.

3. Vorrichtung nach Anspruch 1 oder 2, dadurch gekennzeichnet, daß das Gehäuse (6) in Längsrichtung durch aufeinanderfolgende Querwände (7) unterteilt ist, die bei Einnahme der Betriebslage im wesentlichen horizontal verlaufen.

4. Vorrichtung nach Anspruch 3, dadurch gekennzeichnet, daß an der Unterseite (8) jeder Querwand (7) zumindest ein nach unten ragender Steg (9) vorgesehen ist, der sich bis zur Außenwandung (20) des Gehäuses (6) erstreckt und im Zusammenwirken mit dieser jeweils zumindest zwei Kammern festlegt, von denen eine als Auffangkammer (13) und eine andere als Überlaufkammer (12) dient, in welcher eine Überlauföffnung (14) angeordnet ist, wobei die Auffangkammer (13) vorzugsweise größer ist als die Überlaufkammer (12).

5. Vorrichtung nach Anspruch 4, dadurch gekennzeichnet, daß die Überlauföffnung (14) die Querwand (7) durchsetzt.

6. Vorrichtung nach Anspruch 4 oder 5, dadurch gekennzeichnet, daß von den durch aufeinanderfolgende Querwände (7) begrenzten Kammern (1) jeweils die Überlauföffnung (14) der Überlaufkammer (12) unter der darüberliegenden Auffangkammer (13) angeordnet ist.

7. Vorrichtung nach einem der Ansprüche 4 bis 6, dadurch gekennzeichnet, daß die Stege (9) aufeinanderfolgender Querwände (7) gegeneinander versetzt sind.

8. Vorrichtung nach einem der Ansprüche 4 bis 6, dadurch gekennzeichnet, daß die Stege (9) aufeinanderfolgender Querwände (7) parallel zueinander verlaufen.

9. Vorrichtung nach einem der vorstehenden Ansprüche, dadurch gekennzeichnet, daß eines der Längsteile (3 bzw. 4) einen geradlinigen Wandungsbereich der Kammern (1) festlegt, der vorzugsweise senkrecht zu den Stegen (9) verläuft.

10. Vorrichtung nach Anspruch 9, dadurch gekennzeichnet, daß eines der Längsteile (3 bzw. 4) eine im wesentlichen ebene Platte ist.

11. Vorrichtung nach einem der vorstehenden Ansprüche, dadurch gekennzeichnet, daß eines der Längsteile (3 bzw. 4) mit U-förmigem Querschnitt ausgebildet ist.

12. Vorrichtung nach einem der Ansprüche 3 bis 11, dadurch gekennzeichnet, daß sämtliche Querwände (7) und/oder Stege (9) einstückig in einem der Längsteile (3 bzw. 4) integriert ausgebildet sind.

13. Vorrichtung nach einem der vorstehenden Ansprüche, dadurch gekennzeichnet, daß die Kammern (1) kaskadenförmig in einer Säule angeordnet sind.

14. Vorrichtung nach einem der vorstehenden Ansprüche, dadurch gekennzeichnet, daß die beiden Längsteile (3,4) durch zumindest eine Nut (10) und einen Klemmstab (11) lösbar miteinander verbunden sind.

15. Vorrichtung nach Anspruch 14, dadurch gekennzeichnet, daß die Querwände (7) miteinander fluchtende Nuten (10) enthalten, in welche ein Klemmstab (11) lösbar einbringbar ist.

16. Vorrichtung nach einem der Ansprüche 4 bis 15, dadurch gekennzeichnet, daß die Überlauföffnung (14) in dem Bereich der jeweiligen Querwand (7) vorgesehen ist, an dem die beiden Längsteile (3,4) aneinander angrenzen.

17. Vorrichtung nach einem der vorstehenden Ansprüche, dadurch gekennzeichnet, daß eines der Längsteile (3 bzw. 4) an seiner Außenseite Halterungsmittel für einen Gasschlauch (16) enthält, der bis zu der Gaseinleitungskammer (18) führt.

18. Vorrichtung nach Anspruch 17, dadurch gekennzeichnet, daß der Gasschlauch (16) in eine Nut (15) der Längsteile (3, 4) geklemmt ist.

19. Vorrichtung nach einem der vorstehenden Ansprüche, dadurch gekennzeichnet, daß das Gehäuse (6) Durchbrüche (17) zwischen aufeinanderfolgenden Kammern (1) für den Flüssigkeitsaustausch enthält.

20. Vorrichtung nach einem der vorstehenden Ansprüche, dadurch gekennzeichnet, daß die Längsteile (3,4) aus demselben Material bestehen.

21. Vorrichtung nach einem der vorstehenden Ansprüche, dadurch gekennzeichnet, daß die Längsteile (3,4) aus einem vorzugsweise durchsichtigen Kunststoff bestehen.

22. Vorrichtung nach einem der vorstehenden Ansprüche, dadurch gekennzeichnet, daß Halterungen (19) zur Befestigung der Vorrichtung in einem Flüssigkeitsbehälter vorgesehen sind.

## Claims

1. Device for dissolving gases in liquids, especially for continuously enriching aquarium water with CO₂ gas, having a gas introduction chamber (18) which is open at the bottom, and at least one further chamber (1), also open at the bottom after taking up the operating position, which through perforations or openings (17) in the lower part of its lateral wall is exposed to the surrounding liquid, wherein adjacent chambers (1, 18) are arranged one above the other in such a way that during the introduction of gas into a lower chamber the excess gas, after filling of this chamber, can be collected in a chamber arranged above the latter in the manner of a pneumatic trough and said gas volume forming on its underside a gas exchange surface (5) to the adjacent liquid,
characterised in that at least two successive chambers (1, 18) are integrated in a housing (6) which is composed of two vertically oriented longitudinal parts (3, 4) which together form the lateral walls of each chamber (1, 18) integrated in the housing (6).

2. Device according to claim 1,
characterised in that the longitudinal parts (3, 4) are releasably connected with each other.

3. Device according to claim 1 or 2,
characterised in that the housing (6) in the longitudinal direction is subdivided into successive transverse walls (7) which run essentially horizontally when taking up the operating position.

4. Device according to claim 3,
characterised in that on the underside (8) of each transverse wall (7) there is provided at least one downwardly projecting web (9) which extends to the outer wall (20) of the housing (6) and which in co-operation with this outer wall in each case defines at least two chambers, of which one serves as collecting chamber (13) and another as an overflow chamber (12) in which is arranged an overflow opening (14), wherein the collecting chamber (13) is preferably larger than the overflow chamber (12).

5. Device according to claim 4,
characterised in that the overflow opening (14) penetrates the transverse wall (7).

6. Device according to claim 4 or 5,
characterised in that for the chambers (1) delimited by the successive transverse walls (7) the overflow opening (14) of the overflow chamber (12) is in each case arranged below the collecting chamber (13) situated above this.

7. Device according to one of the claims 4 to 6,
characterised in that the webs (9) of successive transverse walls (7) are offset with respect to each other.

8. Device according to one of the claims 4 to 6,
characterised in that the webs (9) of successive transverse walls (7) run parallel to each other.

9. Device according to one of the preceding claims,
characterised in that one of the longitudinal parts (3 or 4) defines a wall region of the chambers (1) which is in straight line and which preferably runs perpendicular to the webs (9).

10. Device according to claim 9,
characterised in that one of the longitudinal parts (3 or 4) is essentially a flat plate.

11. Device according to one of the preceding claims,
characterised in that one of the longitudinal parts (3 or 4) is constructed with a U-shaped cross-section.

12. Device according to one of the claims 3 to 11,
characterised in that all the transverse walls (7) and/or webs (9) are integrated in one of the longitudinal parts (3 or 4) in one piece.

13. Device according to one of the preceding claims,
characterised in that the chambers (1) are arranged cascade-like in a column.

14. Device according to one of the preceding claims,
characterised in that the two longitudinal parts (3, 4) are releasably connected to each other by at least one groove (10) and a clamping bar (11).

15. Device according to claim 14,
characterised in that the transverse walls (7) contain grooves (10), which are aligned with each other, in which a clamping bar (11) can be releasably inserted.

16. Device according to one of the claims 4 to 15,
characterised in that the overflow opening (14) is provided in the area of the respective transverse wall (7) which borders on to the two longitudinal parts (3, 4).

17. Device according to one of the preceding claims,
characterised in that one of the longitudinal parts (3 or 4) on its outside contains holding means for a gas tube (16) which leads to the gas introduction chamber (18).

18. Device according to claim 17,
characterised in that the gas tube (16) is wedged into a groove (15) of the longitudinal parts (3, 4).

19. Device according to one of the preceding claims,
characterised in that the housing (6) contains perforations (17) between successive chambers (1) for the liquid exchange.

20. Device according to one of the preceding claims,
characterised in that the longitudinal parts (3, 4) consist of the same material.

21. Device according to one of the preceding claims,
characterised in that the longitudinal parts (3, 4) consist of a preferably transparent plastic.

22. Device according to one of the preceding claims,
characterised in that the holding means (19) for securing the device are provided in a liquid container.

## Revendications

1. Dispositif pour dissoudre des gaz dans des liquides, en particulier pour enrichir de façon continue de l'eau d'aquarium avec du CO₂-gazeux, avec une chambre d'introduction de gaz (18) ouverte vers le bas, et au moins une autre chambre (1) également ouverte vers le bas, après mise en position de fonctionnement, qui est ouverte vis-à-vis du liquide environnant, par des découpes ou des ouvertures (17) ménagées dans la partie inférieure de sa paroi latérale, les chambres (1, 18) voisines étant situées l'une au-dessus de l'autre de manière que, lors de l'introduction de gaz dans une chambre inférieure, le gaz qui se déverse après avoir rempli cette chambre est susceptible d'être capté par une chambre située au-dessus, à la façon d'une cuve pneumatique, et ledit volume de gaz constituant sur sa face inférieure une surface d'échange de gaz (5) vis-à-vis du liquide limitrophe, caractérisé en ce qu'au moins deux chambres (1, 18) situées l'une à la suite de l'autre sont intégrées dans un boîtier (6) qui est constitué de deux parties longitudinales (3, 4) orientées verticalement et constituant conjointement les parois latérales de chaque chambre (1, 18) intégrée dans le boîtier (6).

2. Dispositif selon la revendication 1, caractérisé en ce que les parties longitudinales (3, 4) sont reliées ensemble de façon désolidarisable.

3. Dispositif selon la revendication 1 ou 2, caractérisé en ce que le boîtier (6) est subdivisé dans la direction longitudinale par des parois transversales (7) se suivant, qui s'étendent de façon sensiblement horizontale lorsque la position de fonctionnement est prise.

4. Dispositif selon la revendication 3, caractérisé en ce que sur la face inférieure (8) de chaque paroi transversale (7) est prévue au moins une nervure (9) faisant saillie vers le bas, qui s'étend jusqu'à la paroi extérieure (20) du boîtier (6) et détermine, en coopération avec celle-ci, chaque fois au moins deux chambres, dont l'une sert de chambre de captage (13) et l'autre de chambre de déversement (12), dans laquelle est ménagée une ouverture de déversement (14), la chambre de captage (13) étant, de préférence, plus grande que la chambre de déversement (12).

5. Dispositif selon la revendication 4, caractérisé en ce que la chambre de déversement (14) traverse la paroi transversale (7).

6. Dispositif selon la revendication 4 ou 5, caractérisé en ce que, parmi les chambres (1) délimitées par des parois transversales (7) successives, chaque fois l'ouverture de déversement (14) de la chambre de déversement (12) est disposée sous la chambre de captage (13) située au-dessus.

7. Dispositif selon l'une des revendications 4 à 6, caractérisé en ce que les nervures (9) de parois transversales (7) successives sont mutuellement décalées.

8. Dispositif selon l'une des revendications 4 à 6, caractérisé en ce que les nervures (9) de parois transversales (7) successives s'étendent parallèlement les unes aux autres.

9. Dispositif selon l'une des revendications précédentes, caractérisé en ce que l'une des parties longitudinales (3 ou 4) constitue une zone de paroi rectiligne des chambres (1), qui s'étend de préférence perpendiculairement par rapport aux nervures (9).

10. Dispositif selon la revendication 9, caractérisé en ce que l'une des parties longitudinales (3 ou 4) est une plaque sensiblement plane.

11. Dispositif selon l'une des revendications précédentes, caractérisé en ce que l'une des parties longitudinales (3 ou 4) est réalisée avec une section transversale en forme de U.

12. Dispositif selon l'une des revendications 3 à 11, caractérisé en ce que l'ensemble des parois transversales (7) et/ou des nervures (9) sont réalisées d'une seule pièce, intégrées dans l'une des parties longitudinales (3 ou 4).

13. Dispositif selon l'une des revendications précédentes, caractérisé en ce que les chambres (1) sont disposées en forme de cascade dans une colonne.

14. Dispositif selon l'une des revendications précédentes, caractérisé en ce que les deux parties longitudinales (3, 4) sont reliées ensemble de façon désolidarisable à l'aide d'au moins une rainure (10) et d'une barrette de connexion (11).

15. Dispositif selon la revendication 14, caractérisé en ce que les parois transversales (7) contiennent des rainures (10) alignées les unes sur les autres, dans lesquelles une barrette de connexion (11) est susceptible d'être logée de façon désolidarisable.

16. Dispositif selon l'une des revendications 4 à 15, caractérisé en ce que l'ouverture de déversement (14) est prévue dans la zone de la paroi transversale (7) respective où les deux parties longitudinales (3, 4) sont adjacente l'une à l'autre.

17. Dispositif selon l'une des revendications précédentes, caractérisé en ce que l'une des parties longitudinales (3 ou 4) contient sur sa face extérieure des moyens de fixation pour un tuyau à gaz flexible (16) qui conduit jusqu'à la chambre d'introduction de gaz (18).

18. Dispositif selon la revendication 17, caractérisé en ce que le tuyau à gaz flexible (16) est pincé dans une rainure (15) des parties longitudinales (3, 4).

19. Dispositif selon l'une des revendications précédentes, caractérisé en ce que le boîtier (6) contient des découpes (17) entre des chambres (1) successives, pour l'échange de liquide.

20. Dispositif selon l'une des revendications précédentes, caractérisé en ce que les parties longitudinales (3, 4) sont constituées du même matériau.

21. Dispositif selon l'une des revendications précédentes, caractérisé en ce que les parties longitudinales (3, 4) sont constituées d'une matière plastique, de préférence transparente.

22. Dispositif selon l'une des revendications précédentes, caractérisé en ce que des fixations (19) destinées à la fixation du dispositif dans un réservoir de liquide sont prévues.
